# EUROPEAN PATENT APPLICATION

(11) **EP 0 978 952 A2**
(43) Date of publication of application: **09.02.2000**
(21) Application number: 99306083.9
(22) Date of filing: 30.07.1999
(51) Int. Cl.: H04B 3/56

(54) **Power networks**

(30) Priority: 04.08.1998 GB 9816953
(71) Applicant: Nor. Web Dpl Limited, Slough, Berkshire SL1 4DX (GB)
(72) Inventor: Brown, Paul Anthony, Kendal, Cumbria LA9 6EA (GB)
(74) Representative: Hackney, Nigel John

(57) **Abstract**

An electricity distribution and/or power transmission network is provided in which the network includes input means for the input of a telecommunications signal onto an earth (3) or neutral conductor of the network and output means for removing said telecommunications signal from the network. Preferably, the network includes a transformer for connecting first and second portions of the network, and includes bypass means for removing the signal from the conductor in the first portion of the network and inputting the signal onto any conductor (phase, earth or neutral) of the second portion of the network.

## Description

This invention relates to a method of signal injection, transmission, interconnection (termination) and detection, and to a power transmission network, ie. a mains electricity distribution and/or transmission network. In particular it relates to the use of mains electricity networks and/or lines for telecommunications transmission (e.g. voice, data, image and/or video).

In the UK, it is conventional to describe a power network for 33kV and above as a "transmission network", and one for less than 33kV as a "distribution network". In this specification the term "electricity distribution and/or power transmission network" (EDN) is normally used, but general references to power networks and to transmission of signals are to be construed as applying to all such networks.

Traditionally telecommunications signals have been transmitted on independent networks e.g. telephone lines. More recently, in order to simplify and increase efficiency of telecommunications services to domestic or industrial premises, there have been investigations into using existing electricity transmission and distribution networks to carry telecommunications services.

In particular, transmission of telecommunications signals on such networks is described in the applicant's prior PCT applications, published as WO94/09572, WO95/29536, WO95/29537, WO96/07245, WO98/19318, the disclosures of which are incorporated herein by reference.

The present invention aims to provide a method and apparatus for telecommunications transmission on a power network which allows for easier/safer connection to the power network.

Accordingly, in a first aspect, the present invention provides an electricity distribution and/or power transmission network, the network including input means for the input of a telecommunications signal onto an earth or neutral conductor of the network and output means for removing said telecommunications signal from the network.

This provides a means of efficiently and cost-effectively interconnecting power line telecommunication (PLT) signals to the power line by using a (usually) non-current carrying conductor. It also allows connection between different voltage levels on an electricity distribution network (EDN) as explained below. For example, between the secondary (low voltage 120-0-120 volt) and primary networks (high voltage 7.2 kV) of a North American EDN.

By contrast, if the telecommunications signals were on one of the phase conductors, a transformer by-pass technique would require the provision of a robust signal path for the PLT signals which are required to by-pass the low and high voltage windings of a typical distribution transformer. In particular, the relatively high voltage (eg. 7.2 kV) interconnections would require the use of expensive, high quality, high voltage capacitors together with high voltage fuse links and the practical designs usually require the use of high voltage resins in their fabrication.

Preferably, the invention provides a much simpler and more cost effective solution for interconnecting PLT signals where at least the primary, or high voltage, EDN utilises power cables with a neutral/earth sheath of conductors each having separation from the other. As a result the neutral/earth sheath might preferably be utilised to carry PLT signals and 60 Hz neutral and/or earth currents without any mutual impairments.

Preferably the neutral or earth conductor is substantially isolated from the electrical earth at frequencies to be used by the telecommunications signal. The high frequency isolation may be achieved by a suitable inductor being electrically connected between the conductor and electrical earth, and the inductor may consist of a ferrite or ferromagnetic sleeve located substantially around a part of the conductor. Preferably, the inductor can conduct at least a 10A current.

Preferably, the network includes a transformer for connecting first and second portions of the network, and includes bypass means for removing the signal from the conductor in the first portion of the network and inputting the signal onto any conductor (phase, earth or neutral) of the second portion of the network.

In one embodiment, signal propagation is between the neutral conductor and/or the "earth" conductor of the network and electrical earth.

Preferably, at least part of the network is external to a building and the signal is transmissible along the external part of the network. Preferably, the network connects a plurality of separate buildings and said signal is transmissible between said buildings.

Preferably, the carrier frequency of the signals is above approximately 1MHz. The carrier frequency may in fact be less than 1MHz ie. 800KHz or even as low as 600KHz, but as it is reduced so is the usable bandwidth.

A plurality of telecommunications signals may be provided, each having different carrier frequencies. The term "carrier frequency" refers to the unmodulated frequency of the carrier signal, and not to the frequency of the telecommunications signal once modulated.

On, for example, a 400V network the carrier frequency may preferably be between 1-10MHz, and on, eg., a 11kV network may be between e.g. 1-20MHz, or possibly 5-60MHz. However the frequency may be up to 100's of MHZ depending on the network and the application. For example, over short distances (10-20m) a frequency range of e.g. 1-600MHz or 1-800MHz may be used.

The power network may include one or more phases. Preferably the network is a polyphase network including e.g. any one or more of 2, 3, 4, 5, 6, 7 etc phases. Different sections of the network may include different numbers of phases.

The network may typically be a trunk and branch multipoint (or point to multipoint) electricity distribution and/or power transmission network. In some instances a plurality of trunk and branch networks may be joined e.g. to form a ring.

Preferably the network is balanced i.e. provides balanced transmission characteristics. The network may also be unbalanced or a combination of both. The network may be an "overhead" network i.e. the cable(s) of the network may lie above ground e.g. flown or strung between pylons, or may be substantially underground. The network may also e.g. be underground or underwater.

Preferably at least part (or all) of the transmission network is external to any building or premises such as an office or house and the signal(s) is/are transmissible along said external part. Inside such buildings, transmission distances are typically short and therefore attenuation losses relatively unimportant.

Preferably the power network is a major (e.g. overground) power network including e.g. any or all of 132kV, 33kV, 11kV, 415V and 240V sections. The telecommunications signals may be transmitted over any or all of the sections of the power network by suitable detection, amplification and/or regeneration and reintroduction as and when necessary.

In order to overcome the problem of coupling HF communications signals across transformers at various voltage levels a HF by-pass unit is preferably provided which can either provide for balanced to balanced or balanced to unbalanced by-pass in either direction, i.e. primary to secondary or secondary to primary sides of the power transformer.

The by-pass unit may utilise any or all of: fuse protection, capacitive coupling, dust iron or ferrite transformer impedance matching and balanced or unbalanced termination capability. The frequency response of the ferrite materials at 50 to 60 Hz is negligible and by suitable centre tapping of the primary and/or secondary windings together with adequate insulation of the core materials good flashover protection may be provided.

It should be noted that by utilising HF communications signals above 1 MHz together with inductor core materials such as dust iron and ferrite, it becomes possible to fabricate and high impedance inductive elements which are sufficiently small in physical size to be retro fitted to existing OH EDN support structures and in many cases may simply replace existing jumper wires.

According to a further aspect, the present invention provides a method of signal transmission including input of a telecommunications signal onto an earth or neutral conductor of an electricity distribution and/or power transmission network, and subsequent reception of the signal.

Embodiments of the present invention will now be described with reference to the accompanying drawings in which:
Figure 1a is a side view of a sample of one of the types of power cable with which the present invention may be used;
Figure 1b is an end view of the cable of figure 1a;
Figure 2 is a schematic diagram showing an embodiment of the present invention;
Figure 3 is a schematic diagram of the transformer bypass of figure 2;
Figure 4a is a side view of a second cable with which the present invention may be used;
Figure 4b is an end view of the cable of figure 4a.

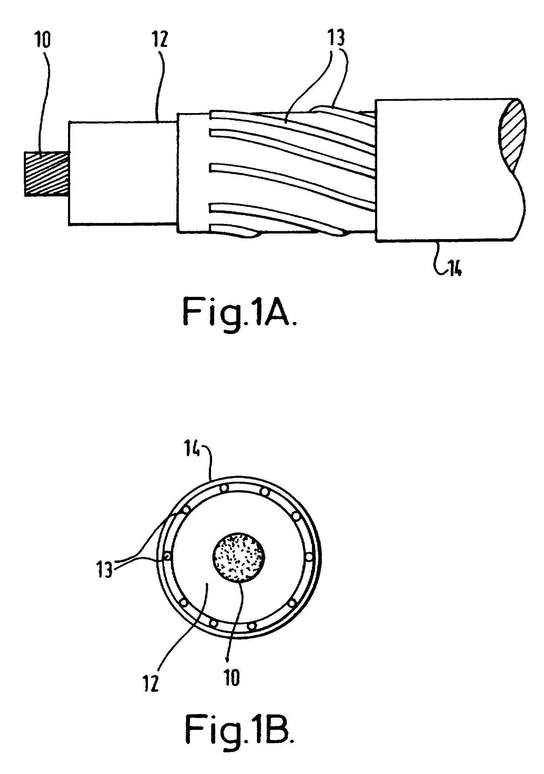

Figures 1a and 1b illustrate a sample of power cable which has a central conductor (10) - although polyphase conductors may be provided - composed of a number of twisted aluminium conductors and which is insulated by a sheath of XLPE (12) material from a further sheath of the (eg. copper) neutral earth conductors (13). The whole cable is encased in a further outer sheath (14). Each of these conductors (13) is equally spaced about the outer circumference of the cable. It follows that if we consider each of these conductors as an isolated pair we have a means to carry power line telecommunications (PLT) signals along the length of the power cable. However, the 'pairs' chosen to carry PLT signals may also be required to carry 60 Hz neutral and/or earth current.

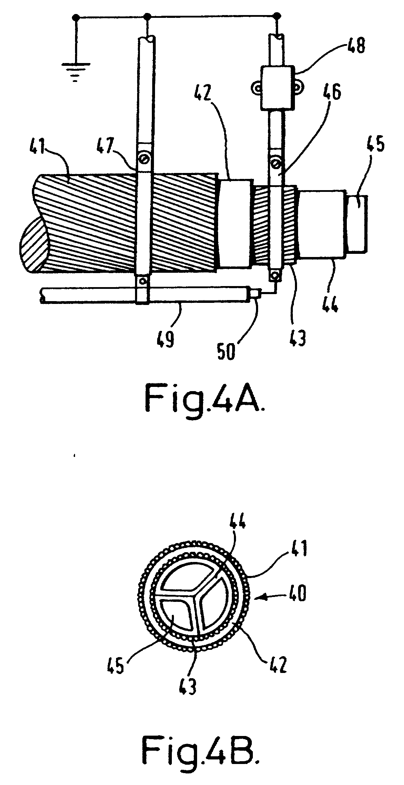

In order to be utilised for PLT signals, the neutral/earth conductors (13) need to be isolated (as far as the high frequency communication signals are concerned) from earth potential. This is done by placing an inductor between each conductor (13) being used and the earth connection. The inductor (not shown but similar to the set up in figure 4) may be a separate component or alternatively may be formed by placing a ferrite or ferromagnetic sheath substantially around a part of the conductor (13).

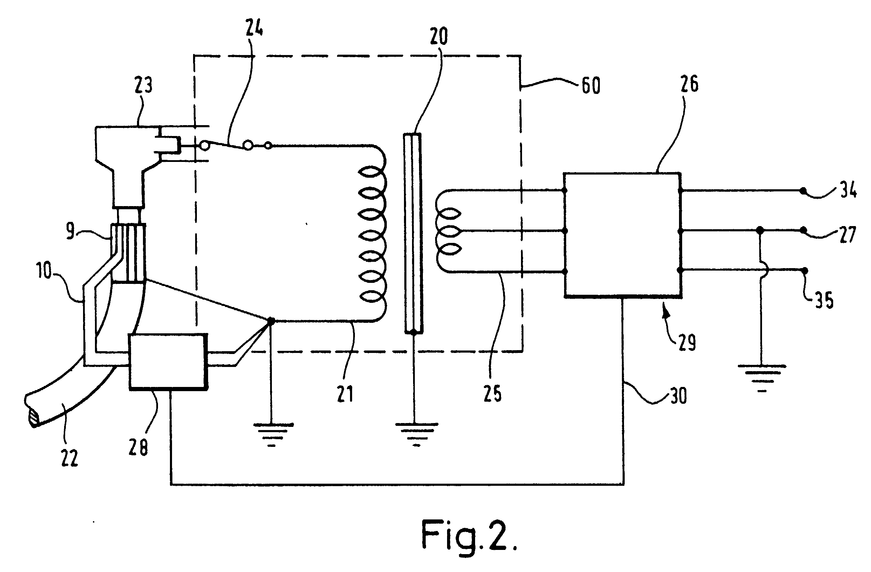

Figure 2 illustrates a method of permitting the cable of figure 1a to be utilised in a dual mode; that is to carry both electrical energy between the inner core and the outer sheath conductors and to further carry PLT signals between two or more of the outer sheath conductors. An EDN, single phase, power transformer (20) has a primary, high voltage, winding (21) which is fed by high voltage via a high voltage feeder cable (22), plug/socket connector (23) and a high voltage fuse link (24) which is usually fitted inside the transformer unit.

The transformer split secondary winding (25) is centre tapped and is connected to the low voltage secondary distribution cables via a terminal unit (26). In North America the secondary centre tap (27) is normally earthed at the transformer providing two 120 volts, 60 Hz, potential about earth (ie. 120 volts-0-120 volts).

The transformer windings, core and fuse links are normally contained in a steel tank (28) that is oil-filled and bonded to earth. In order to provide an efficient coupling path for PLT signals, frequency selective filtering, balancing (balanced to unbalanced, unbalanced to balanced etc) and isolation devices may be required. These devices are housed in terminal units (28) and (29) and interconnected via a balanced or unbalanced coupling limk (30).

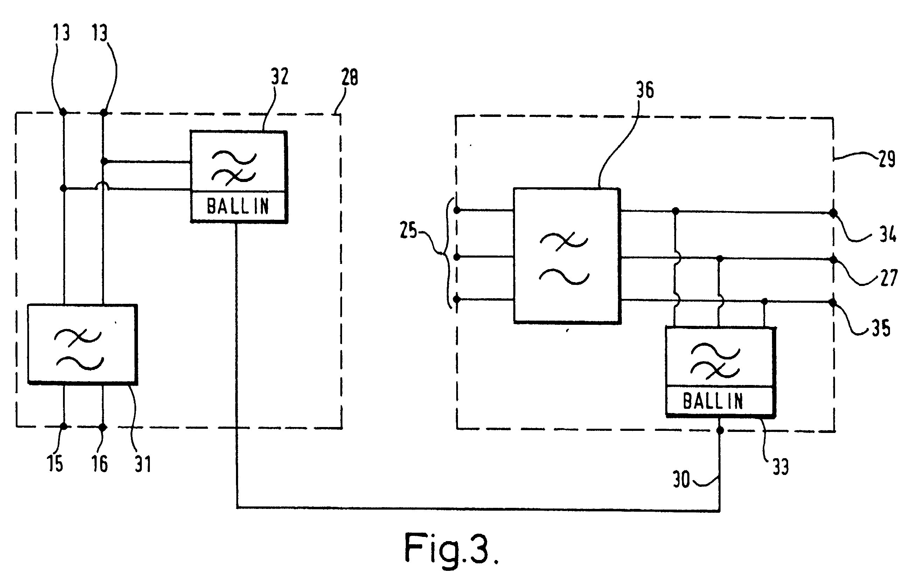

Figure 3 illustrates the filtering options with balanced to unbalanced conversion as desired. The Primary Terminal unit (PTU) (28) contains a low-pass filter, a balun and a high-pass filter. The low-pass filter (31) connects to two, or more of the outer cable conductors (13) and to the high-pass filter (32), which interconnects via a suitable balun onto the coaxial interconnector (30). The low-pass filter (31) also connects to the, 60 Hz, earth rail thus permitting the neutral currents in the power cable sheath conductors to remain at or about earth potential whilst maintaining a high impedance at the PLT signalling frequencies of interest.

The coaxial interconnector (30) terminates in a balun and high-pass filter unit (33) at the Secondary Terminal Unit (STU) (29). This enables the PLT signals to pass to and from the unbalanced coaxial interconnector to the, balanced, secondary supply cables (34, 35) about earth (27) and to be conducted together with the low voltage, 60 Hz, mains supply to and from the customer premises PLT equipment.

The low-pass filter unit (36) enables the 60 Hz power components to pass from the transformer secondary winding (25) to the low voltage distribution cable connections (34, 27, 35) whilst providing a high impedance to the PLT signal frequencies present at (34) and (35) about earth (27). The low-pass filter unit (36) may be omitted and is dependent upon the acceptable loading (reactance) of the transformer secondary winding at the PLT signal frequencies.

Whilst the embodiment as described above illustrates, balanced, PLT signal transmission on a pair of, adjacent, conductors on the outer cable sheath any combination of conductors might be utilised. For example, one conductor might be fed in an unbalanced mode against the remaining 9. Alternatively, 2 against 8, or 5 against 5 in the balanced mode if appropriate. It should be remembered that some power cables utilise a semi-conductive coating around the outer sheath conductors, see Figure 1, 5 and this may necessitate specific configurations or bunching of the sheath conductors to optimise efficiency at the PLT signal frequencies.

This invention is also applicable to power cables where all or some of the sheath conductors may be separately insulted, including situations where steel wire armour (SWA), metal conduit and/or adjacent metal pipework might be utilised as a PLT signal conductor or as part of a PLT signal path.

Such a power cable is illustrated in Figure 4a and 4b. The cable (40) has a SWA outer sleeve (41) followed by a sleeve of insulation (42) followed by a further sleeve of neutral conductors (43) followed by further insulation (44), separately formed around each of three phase conductors (45). Both the SWA sleeve and the neutral conductors are usually to be earthed eg. via earthing clamps (46) and (47) and their associated earth conductors (8).

By providing a ferrite sleeve (48) on one or both of the earth conductors, or by placing an inductor in series with the earth connection(s), we can provide a degree of frequency selective isolation (series inductive reactance) before the common earth point, thus permitting the PLT signal to be fed over the power cable, between the outer SWA sheath (47) and the inner neutral sheath (48). The PLT signal may be fed in either the unbalanced or balanced mode. In the unbalanced mode, the outer conductor sheath of the PLT signal coaxial cable (49) may be coupled to the power cable SWA via earth clip (46) and the inner coaxial conductor (50) may be coupled onto the neutral conductors of the power cable via earth clamp (46).

The reactance of the ferrite sleeve (48) is minimal at power frequencies (ie. 50/60Hz) and will therefore have minimal impact on any neutral and/or earth currents at these frequencies. The reactance of the ferrite sleeve is designed to be greater than the characteristic impedance of the power/coaxial cables at the lowest PLT signal frequency and thereby provides a relatively high impedance path to earth at this and higher frequencies (ie. inductive reactance is directly proportional to frequency). Preferably the conductor can carry suitable fault current according to the network design.

As a result, an efficient PLT signal coupling arrangement is provided between the telecommunication coaxial cable and the power cable neutral and earth conductors, over the required PLT frequency band. The higher the PLT signal frequency band the more easily this might be achieved. A balun(s) and/or impedance transformer(s) might also be utilised should there be considerable impedance miss-match between the telecommunication and power cable components.

Similarly, if two ferrite sleeves are introduced, one for each earth conductor, the PLT signals may be introduced in the balanced mode (eg. via a twisted pair telecommunications cable) and this might, in some circumstances (unsheathed multi-conductor power cable with separate neutral earth conductors), reduce the level of radiated emissions from the cable(s). For ease of fitting, the ferrite sleeve(s) might be split and clamped over the earth cable(s), this might also reduce fitting time and minimise the overall cost of deployment.

The above embodiments of the present invention have been described by way of example only and various alternative features or modifications from what has been specifically described and illustrated can be made within the scope of the invention, as will be readily apparent to a person skilled in the art.

## Claims

1. An electricity distribution and/or power transmission network, the network including input means for the input of a telecommunications signal onto an earth or neutral conductor of the network and output means for removing said telecommunications signal from the network.

2. A network according to claim 1 wherein said neutral or earth conductor is substantially isolated from the electrical earth at frequencies to be used by the telecommunications signal.

3. A network according to claim 2 wherein the high frequency isolation is achieved by a suitable inductor being electrically connected at relevant frequencies between the conductor and electrical earth.

4. A network according to claim 3 wherein at least part of the inductor consists of a ferrite or ferromagnetic sleeve located substantially around a part of the conductor.

5. A network according to claim 3 or 4 wherein the inductor can continuously conduct at least a 10A current at power frequency.

6. A network according any one of the above claims including a transformer for connecting first and second portions of the network, and including bypass means for removing the signal from the conductor in the first portion of the network and inputting the signal onto any conductor (phase, earth or neutral) of the second portion of the network.

7. A network accordingly to any of the above claims wherein signal propagation is between the neutral conductor of the network and electrical earth.

8. A network according to any of the above claims wherein at least part of the network is external to a building and the signal is transmissible along the external part of the network.

9. A network according to any of the above claims wherein the network connects a plurality of separate buildings and said signal is transmissible between said buildings.

10. A network according to any of the above claims wherein the network is a trunk and branch multipoint electricity distribution and/or power transmission network.

11. A network accordingly to any of the above claims wherein the signal has a carrier frequency greater than approximately 1 MHZ.

12. A method of signal transmission including input of a telecommunications signal onto an earth or neutral conductor of an electricity distribution and/or power transmission network, and subsequent reception of the signal.

13. A method according to claim 12 wherein said neutral or earth conductor is substantially isolated from the electrical earth at frequencies to be used by the telecommunications signal.

14. A method according to claim 13 wherein the high frequency isolation is achieved by a suitable inductor being electrically connected at relevant frequencies between the conductor and electrical earth.

15. A method according to claim 14 wherein at least part of the inductor consists of a ferrite or ferromagnetic sleeve located substantially around a part of the conductor.

16. A method according to claim 14 or 15 wherein the inductor can continuously conduct at least a 10A current at power frequency.

17. A method according to any one claims 12-16 wherein the network includes a transformer for connecting first and second portions of the network, and the method includes bypassing the transformer at communication frequencies by removing the signal from the conductor in the first portion of the network and inputting the signal onto any conductor (phase, earth or neutral) of the second portion of the network.

18. A method according to any of claims 12-17 wherein signal propagation is between a neutral conductor of the network and electrical earth.

19. A method according to any of claims 12-18 wherein at least part of the network is external to a building and the signal is transmitted along the external part of the network.

20. A method according to any of claims 12-19 wherein the network connects a plurality of separate buildings and said signal is transmissible between said buildings.

21. A method according to any of claims 12-20 wherein the network is a trunk and branch multipoint electricity distribution and/or power transmission network.

22. A method according to any of claims 12-21 wherein the signal has a carrier frequency greater than approximately 1 MHZ.
